# EUROPÄISCHE PATENTSCHRIFT

(11) **EP 2 681 001 B1**
(45) Veröffentlichungstag und Bekanntmachung des Hinweises auf die Patenterteilung: **27.05.2015**
(21) Anmeldenummer: 12707511.7
(22) Anmeldetag: 28.02.2012
(51) Int. Cl.: B23K 9/133, B21F 23/00, B65H 79/00

(54) **SCHWEISSDRAHTFÖRDERVORRICHTUNG MIT EINER EIN ARRETIERMITTEL UND EIN DRUCKMITTEL AUFWEISENDEN ARRETIEREINRICHTUNG**
WELDING WIRE CONVEYOR DEVICE COMPRISING A LOCKING DEVICE HAVING A LOCKING MEANS AND A PRESSURE MEANS
DISPOSITIF D'ALIMENTATION DE FIL DE SOUDURE

(30) Priorität: 28.02.2011 DE 102011000961
(43) Veröffentlichungstag der Anmeldung: 08.01.2014
(73) Patentinhaber: Alexander Binzel Schweisstechnik GmbH & Co. KG, 35418 Buseck (DE)
(72) Erfinder: HENCHE, Klaus, 35792 Löhnberg (DE); METZGER, Hubert, 35423 Lich (DE); FABER, Andre, 35463 Fernwald (DE)
(74) Vertreter: Müller, Eckhard
(86) Internationale Anmeldenummer: PCT/EP2012/053303
(87) Internationale Veröffentlichungsnummer: WO 2012/116966

(56) Entgegenhaltungen:
- GB-A- 301 125
- US-A1- 2006 278 624

## Beschreibung

Die Erfindung betrifft eine Schweißdrahtfördervorrichtung nach dem Oberbegriff des Patentanspruchs 1 (siehe z.B. GB 301 125 A).

### Stand der Technik

Aus dem Stand der Technik sind bereits eine Vielzahl von Schweißdrahtfördervorrichtungen zum Fördern von Schweißdraht zu einem Schweißbrenner bekannt. Die Schweißdrahtfördervorrichtung ist zwischen einem Schweißdrahtbehältnis und dem Schweißbrenner angeordnet und wird vorzugsweise eingesetzt, wenn der Schweißdraht über besonders weite Strecken zu transportieren ist, wie es zum Beispiel im Schiffs-, Brücken- und Hallenbau der Fall ist. Dabei gelangt der Schweißdraht durch ein Schlauchpaket zur Schweißdrahtfördervorrichtung und dann zum Schweißbrenner.

In der DE 10 2005 041 695 B4 ist eine Schweißdrahtfördervorrichtung beschrieben, die eine Antriebs- und eine schwenkbare Gegendruckrolle aufweist. Ein Verschwenken der Gegendruckrolle in eine Richtung weg von der Antriebsrollenaufnahme erfolgt durch ein Betätigen eines Hebels. Der Hebel ist derart mit einer Feder gekoppelt, dass die Gegendruckrolle sofort in eine Richtung zu der Antriebsrollenaufnahme verschwenkt wird, sobald der Hebel nicht mehr betätigt wird.

Nachteilig an dieser Ausführungsform ist, dass mindestens zwei Personen benötigt werden, um den Schweißdraht in die Schweißdrahtfördervorrichtung einzuführen. Ein derartiges Einführen des Schweißdrahtes kann notwendig werden, wenn im Betrieb der Schweißdraht ausbricht oder ein neuer Schweißdraht zum Schweißen benötigt wird. Zum Einführen des Schweißdrahts in die Schweißdrahtfördervorrichtung ist es notwendig, dass der Benutzer den Hebel betätigt, um die Gegendruckrolle von der Antriebsrolle wegzubewegen. Ohne ein Betätigen des Hebels besteht die Gefahr, dass der Schweißdraht beim Einführen in die Schweißdrahtfördervorrichtung aufgrund des geringen Abstands zwischen der Gegendruckrolle und der Antriebsrolle ausknickt. D.h., dass der erste Benutzer während des gesamten Einlaufvorgangs den Hebel betätigen muss, damit ein Ausknicken des Schweißdrahts verhindert wird. Bei einer Betätigung des Hebels muss der Schweißdraht durch den Benutzer derart geführt werden, dass der Schweißdraht nicht an der Antriebsrolle vorbeiläuft, sondern zwischen die Antriebs- und Gegendruckrolle bewegt wird.

Da der Benutzer mit einer Hand den Hebel betätigen und mit der anderen Hand den Schweißdraht zwischen die Antriebs- und Gegendruckrolle führen muss, ist eine weitere Person notwendig, die eine Stromquelleneinrichtung bedient. Die Bedienung der Stromquelleneinrichtung ist notwendig, da durch diese ein Vorschub eines nicht bestromten Schweißdrahtes in die Schweißdrahtfördervorrichtung ermöglicht wird.

US 2006/ 0 278 624 A1 offenbart eine Schweißdrahtfördervorrichtung mit zwei Rollenaufnahmen, auf denen zwei Rollen angeordnet sind. Die erste Rolle ist mit einem Schwenkhebel gekoppelt. Bei einem Schwenken des Schwenkhebels aus einer ersten Position in eine zweite Position stößt ein Stoßabschnitt des Schwenkhebels gegen einen vorstehenden Abschnitt eines Lagerabschnitts, auf dem die erste Rolle gelagert ist. Durch das Stoßen des Schwenkhebels gegen den vorstehenden Abschnitt wird die erste Rolle um einen Drehpunkt verschwenkt. Nach einem Verschwenken der ersten Rolle wird diese in der Schwenkposition arretiert. Dazu wird der Schwenkhebel translatorisch bewegt

Ferner ist aus GB 301 125 A eine Schweißdrahtfördervorrichtung mit zwei auf separaten Rollenaufnahmen angeordneten Förderrollen bekannt, wobei eine der Rollenaufnahmen über einen mehrteiligen Hebelmechanismus gegen die Kraft einer Feder aus einer ersten Position in eine zweite Position verschwenkbar ist. Zum Arretieren der Rollenaufnahme in der zweiten Position ist ein zweiter Hebelmechanismus mit einem Rasthaken vorgesehen, welcher mit einer korrespondierenden Rastvertiefung an einem Teil des ersten Hebelmechanismus in Eingriff bringbar ist. Ferner ist eine Feder am zweiten Hebelmechanismus vorgesehen, die die Rastverbindung beim Verschwenken der Rollenaufnahme in die zweite Position automatisch schließt. Dahingegen muss zum Verschwenken der Rollenaufnahme zurück in die erste Position zunächst die Rastverbindung von Hand, durch Betätigen des zweiten Hebelmechanismus, gelöst werden. Eine derartige Arretiereinrichtung mit zwei, insbesondere mehrteiligen Hebelmechanismen ist jedoch technisch sehr aufwendig und daher kostenintensiv und darüber hinaus kompliziert in der Handhabung.

### Aufgabe

Eine Aufgabe der Erfindung besteht darin, eine Schweißdrahtfördervorrichtung bereitzustellen, die die zuvor genannten Nachteile nicht aufweist.

### Darstellung der Erfindung

Die Aufgabe wird durch die Vorrichtung gemäß Patentanspruch 1 gelöst. Vorteilhafte Ausgestaltungen der Erfindung sind Gegenstand der abhängigen Ansprüche.

Eine Schweißdrahtfördervorrichtung weist wenigstens zwei Rollenaufnahmen auf. Wenigstens eine der beiden Rollenaufnahmen ist schwenkbar ausgebildet und mit einem Schwenkbetätigungsmittel gekoppelt. Das Schwenkbetätigungsmittel weist eine Arretiereinrichtung auf, die die Position der Rollenaufnahme arretiert.

Gemäß der Erfindung ist die Arretiereinrichtung an dem Schwenkbetätigungsmittel vorgesehen und weist ein Arretiermittel und ein stauchbares Druckmittel auf, wobei das Druckmittel mit dem Arretiermittel gekoppelt ist.

Das Arretiermittel kann entlang des Außenumfangs wenigstens eine in Längsrichtung des Arretiermittels verlaufende Vertiefung aufweisen. Das Druckmittel kann als ein Mittel ausgebildet sein, das in Richtung zum Arretiermittel vorgespannt ist und zusammengedrückt werden kann, wenn das Druckmittel mit dem von der Vertiefung des Arretiermittels hervorstehenden Bereich in Kontakt ist.

In vorteilhafter Weise kann das Druckmittel mit dem Außenumfang des Arretiermittels gekoppelt sein. So weist das Druckmittel eine größere Länge entlang seiner zum Arretiermittel gerichteten Achse auf, wenn es in die Vertiefung ragt als wenn das Druckmittel mit dem Außenumfang des von der Vertiefung hervorstehenden Bereichs des Arretiermittels in Kontakt ist. Das Druckmittel kann auch mit dem Grund der Vertiefung in Kontakt stehen. Arretier- und Druckmittel sind als Rast- und Gegenrastmittel ausgebildet.

Die Länge der Vertiefung entlang einer Schwenkbetätigungsmittelachse ist derart gewählt, dass bei einer Axialbewegung des Schwenkbetätigungsmittels entlang der Schwenkbetätigungsmittelachse sichergestellt ist, dass das Druckmittel in die Vertiefung ragt bzw. mit dem von der Vertiefung hervorstehenden Bereich in Kontakt ist.

Bei den Rollaufnahmen kann es sich um eine Antriebsrollenaufnahme zum Aufnehmen einer Antriebsrolle und eine Druckrollenaufnahme zum Aufnehmen einer Druckrolle handeln. Ferner kann die Schweißdrahtfördervorrichtung ein Antriebsmittel, insbesondere eine Schneckenwelle, zum Antreiben der Antriebsrollenaufnahme und damit der Antriebsrolle aufweisen. Als Druckrolle wird im Sinne der Erfindung eine Rolle verstanden, über die eine Spannung bzw. Druck auf den Schweißdraht bzw. eine Schweißdrahtelektrode ausgeübt wird. Die Druckrollenaufnahme und damit die Druckrolle können analog zur Antriebsrollenaufnahme durch das Antriebsmittel angetrieben werden.

Das Vorsehen einer Arretiereinrichtung bietet den Vorteil, dass der Benutzer der Schweißdrahtfördervorrichtung das Schwenkbetätigungsmittel nur kurz betätigen muss, um die Rollenaufnahme in eine verschwenkte Position zu bringen. D.h., dass es aufgrund der Arretierung der Position der schwenkbaren Rollenaufnahme nicht mehr notwendig ist, das Schwenkbetätigungsmittel während des gesamten Einführvorgangs des Schweißdrahts in die Schweißdrahtfördervorrichtung zu betätigen. Somit wird die Handhabung der Schweißdrahtfördervorrichtung während des Einführvorgangs erleichtert.

Ein weiterer Vorteil der erfindungsgemäßen Ausführungsform besteht darin, dass zum Einführen des Schweißdrahtes in die Schweißdrahtfördervorrichtung nicht mehr zwei Personen benötigt werden. Dies ergibt sich, weil das Schwenkbetätigungsmittel nicht mehr während des gesamten Einführvorgangs des Schweißdrahtes betätigt werden muss, so dass der Benutzer die Stromquelleneinrichtung selbst bedienen kann.

Als Stromquelleneinrichtung u.a. wird eine Einrichtung zur Steuerung des gesamten Schweißprozesses neben der Bereitstellung des Schweißstromes verstanden. So kann beispielsweise durch die Stromquelleneinrichtung eingestellt werden, ob der Schweißdraht bestromt wird oder nicht und/ oder ob ein Schweißdrahtvorschub, insbesondere ein stromloser Schweißdrahtvorschub, erfolgen soll. Natürlich können noch weitere Parameter des Schweißprozesses durch die Stromquelleneinrichtung eingestellt werden.

Durch ein Betätigen des Schwenkbetätigungsmittels kann die Rollenaufnahme in verschiedene Positionen geschwenkt werden. So befindet sich die Rollenaufnahme in einer Betriebsstellung, wenn das Schwenkbetätigungsmittel nicht betätigt ist. Bei einem Betätigen des Schwenkbetätigungsmittels kann die Rollenaufnahme in eine Schweißdrahteinlaufstellung bewegt werden. Als Schweißdrahteinlaufstellung wird die Stellung der Rollenaufnahme verstanden, bei der sich die schwenkbare Rollenaufnahme soweit von der anderen Rollenaufnahme weg bewegt hat, dass ein stromloser Schweißdrahtvorschub zum Einführen des Schweißdrahts zwischen die beiden Rollen, insbesondere die Druckrolle und die Antriebsrolle erfolgen kann. Wie zuvor erwähnt, kann vorteilhafterweise ein einziger Benutzer die Stromquelleneinrichtung bezüglich des stromlosen Schweißdrahtvorschubs bedienen und gleichzeitig den Schweißdraht zwischen die beiden Rollen führen. Hierbei stehen die Rollenpaare so zueinander, dass sowohl kleinst- als auch größtmögliche Schweißdrahtelektroden ohne zusätzlich auftretenden Reibwiderstand einlaufen können und dabei sicher geführt werden.

Ferner kann die Rollenaufnahme in eine Rollenwechselstellung bewegt werden, bei der ein Wechsel der Rolle von der Rollenaufnahme einfach erfolgen kann. Natürlich ist es auch möglich, dass die Schweißdrahtfördervorrichtung derart ausgebildet ist, dass die Schweißdrahteinlaufstellung der Rollenwechselstellung entspricht.

In einer vorteilhaften Ausgestaltung der Erfindung kann innerhalb der Schweißdrahtfördervorrichtung ein Sensor vorgesehen sein, der die Position der Rollenaufnahme und/ oder der Rolle ermittelt. So kann der Sensor ein Signal an die Stromquelleneinrichtung übermitteln, dass ein stromloser Schweißdrahtvorschub ausgelöst werden soll, wenn sich die Rollenaufnahme in der Schweißdrahteinlaufstellung befindet. Folglich vereinfacht sich die Handhabung der Schweißdrahtfördervorrichtung, da der Benutzer nur noch den Schweißdraht zwischen die beiden Rollen, insbesondere die Druckrolle und die Antriebsrolle, führen muss und sonst keine weitere Aufgaben, wie beispielsweise ein Bedienen der Stromquelleneinrichtung tätigen muss.

Ferner kann der Sensor an die Stromquelleneinrichtung übermitteln, dass kein Schweißdrahtvorschub erfolgen soll, wenn sich die Rollenaufnahme in der Rollenwechselstellung befindet. Natürlich kann auch ein weiterer Sensor vorgesehen sein, der die Position der Rollenaufnahme ermittelt und das zuvor genannte Signal an die Stromquelleneinrichtung übermittelt. Durch das Unterbinden eines Schweißdrahtvorschubs, wenn sich die Rollenaufnahme in der Rollenwechselstellung befindet, kann beim Rollenwechsel ein Schweißdrahtvorschub aufgrund eines unbeabsichtigten Betätigens eines Schalters am Brenner oder an der Stromquelle verhindert werden.

Die Rollenaufnahmen, insbesondere die Druckrollenaufnahme, kann mit einer Hülse gekoppelt werden, wobei die Hülse mit dem Schwenkbetätigungsmittel koppelbar ist. Des Weiteren ist die Hülse mit einem Vorspannmittel gekoppelt, über das eine Vorspannkraft auf die Hülse ausgeübt wird. Die Vorspannkraft kann über die Hülse auf die Rollenaufnahme, insbesondere die Druckrollenaufnahme, und die Rolle, insbesondere die Druckrolle, auf den Schweißdraht übertragen werden. Das Vorspannmittel kann eine Feder aufweisen, die an einem Ende mit der Hülse und an dem anderen Ende mit einem Gewindestift gekoppelt ist. Durch den Gewindestift kann die auf den Schweißdraht wirkende Spannkraft eingestellt werden.

Die Kopplung des Schwenkbetätigungsmittels mit der Hülse kann an dem zur Hülse der Rollenaufnahme, insbesondere der Druckrollenaufnahme, zugewandten Ende des Schwenkbetätigungsmittels erfolgen. So weist das Schwenkbetätigungsmittel an dem zur Hülse der Rollenaufnahme zugewandten Ende einen Koppelabschnitt zum Koppeln mit einem Endabschnitt der Hülse der Rollenaufnahme auf. Der Endabschnitt der Hülse der Rollenaufnahme kann derart ausgebildet sein, dass dieser einen Abschnitt des Schwenkbetätigungsmittels, das zylinderförmig ausgebildet sein kann, wenigstens teilweise umschließen kann. Dabei erfolgt das Umschließen des Schwenkbetätigungsmittels in einem Bereich des Schwenkbetätigungsmittels, der zwischen dem Koppelabschnitt und dem von der Hülse der Rollenaufnahme entfernten Ende des Schwenkbetätigungsmittels vorgesehen ist.

Der Endabschnitt kann derart ausgebildet sein, dass er zwei Vorsprünge und einen Basisabschnitt aufweist, wobei die Vorsprünge von dem Basisabschnitt hervorstehen. Das Schwenkbetätigungsmittel kann zwischen den beiden Vorsprüngen vorgesehen sein.

Der Koppelabschnitt ist derart ausgebildet, dass er einen größeren Durchmesser aufweisen kann als der durch die Hülse der Rollenaufnahme teilweise umschlossene Abschnitt des Schwenkbetätigungsmittels. Ferner kann der Koppelabschnitt derart ausgebildet sein, dass dieser wenigstens bei einer Längsbewegung des Schwenkbetätigungsmittels in eine Richtung, bei der sich die beiden Rollenaufnahmen voneinander weg bewegen, insbesondere bei der sich die Druckrollenaufnahme in eine Richtung weg von der Antriebsrollenaufnahme bewegt, in Kontakt mit dem Endabschnitt der Hülse der Rollenaufnahme gebracht wird. So kann der Koppelabschnitt mit den Vorsprüngen und dem Basisabschnitt des Endabschnitts in Kontakt gebracht werden.

Die Kopplung des Vorspannmittels und des Schwenkbetätigungsmittels mit der Hülse kann derart erfolgen, dass eine Drehung der Hülse und damit der Rollenaufnahme um einen Drehbolzen aufgrund der Vorspannkraft entgegengesetzt zu der Drehung der Hülse ist, die durch ein Betätigen des Schwenkbetätigungsmittels resultiert. Durch eine derartige Kopplung wird auf einfache Weise sichergestellt, dass die Hülse und damit die Rollenaufnahme sowohl in eine Richtung weg von der anderen Rollenaufnahme, beispielsweise in die Schweißdrahteinlaufstellung, als auch in eine Richtung zu der anderen Rollenaufnahme, beispielsweise in die Betriebsstellung, geschwenkt werden kann.

Das Schwenkbetätigungsmittel kann derart ausgebildet werden, dass es entlang seiner Längsachse verschiebbar ist. Dies kann beispielsweise dadurch realisiert werden, dass das Schwenkbetätigungsmittel ein Außengewinde aufweist, das mit einem Innengewinde gekoppelt ist, das beispielsweise mit einer Hülse der Rollenaufnahme gekoppelt ist. Alternativ kann das Innengewinde in einer Buchse vorgesehen sein, die mit dem Außengewinde gekoppelt wird und während des Betätigens des Schwenkbetätigungsmittels durch den Benutzer festgehalten wird. Da die Hülse der Rollenaufnahme ortsfest und/ oder drehfest ist bzw. die Buchse durch den Benutzer gehalten wird und damit ortsfest und/ oder drehfest ist, verschiebt sich bei einem Drehen des Schwenkbetätigungsmittels dieses entlang seiner Längsachse.

In vorteilhafter Weise kann das Arretiermittel zylinderförmig ausgebildet sein. In einem arretierten Zustand der Rollenaufnahme ragt das Druckmittel in die Vertiefung des Arretiermittels. Eine Arretierung kann dadurch erreicht werden, dass das Druckmittel in die Vertiefung einrastet. Das Vorspannmittel übt, wie oben erwähnt, eine Kraft auf die Hülse aus, die aufgrund der Kopplung der Hülse mit dem Schwenkbetätigungsmittel ebenfalls auf das Schwenkbetätigungsmittel wirkt. Dabei wird aufgrund der von der Hülse übertragenen Kraft auf das Schwenkbetätigungsmittel eine Kraft in Längsrichtung ausgeübt, die entgegengesetzt zu der Längsrichtung gerichtet ist, die zu einem Verschwenken der Rollenaufnahme in eine Richtung weg von der anderen Rollenaufnahme führt.

Aufgrund der Kopplung des Schwenkbetätigungsmittels über das Innengewinde mit dem Außengewinde bzw. der Buchse würde ohne ein Vorsehen der Arretiereinrichtung die Vorspannkraft ein Drehen des Schwenkbetätigungsmittels bewirken. Das Drehen des Schwenkbetätigungsmittels wird durch das in die Vertiefung ragende Druckmittel verhindert. Eine Arretierung durch das Druckmittel erfolgt solange die Vorspannkraft und damit die über die von der Vertiefung hervorstehenden Bereiche auf das Druckmittel ausgeübte Kraft kleiner ist als diejenige Kraft, die zum Stauchen des Druckmittels benötigt wird. Im Ergebnis kann durch das zylinderförmige Ausbilden des Arretiermittels mit wenigstens einer Vertiefung und das Vorsehen des Druckmittels eine einfach ausgebildete Arretiereinrichtung ermöglicht werden.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Hierzu zeigen:
- Fig. 1: eine perspektivische Ansicht der Schweißdrahtfördervorrichtung,
- Fig. 2: eine perspektivische Darstellung einer Ansicht der Schweißdrahtfördervorrichtung ohne Gehäuse,
- Fig. 3: eine Seitenschnittansicht der Schweißdrahtfördervorrichtung.

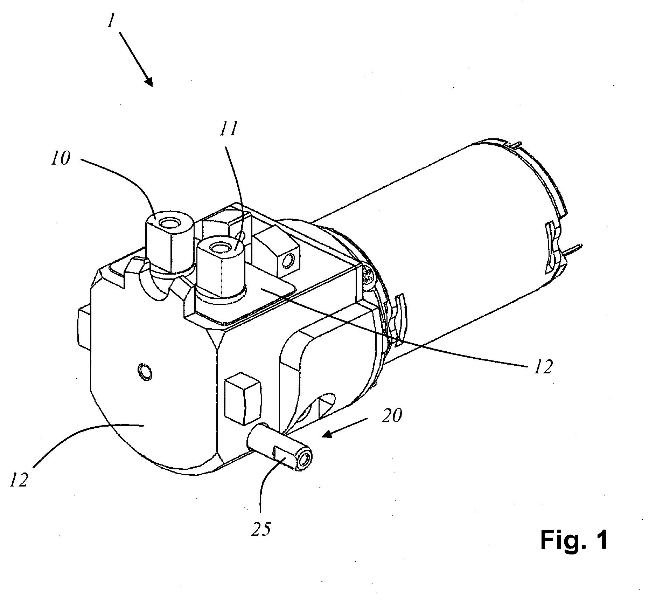

Die in Fig. 1 gezeigte Schweißdrahtfördervorrichtung 1 weist eine Antriebsrollenaufnahme 11 und eine Druckrollenaufnahme 10 auf. Die Druckrollenaufnahme 10 und die Antriebsrollenaufnahme 11 ragen aus einem Gehäuse 12. Genauer gesagt ragen die Druckrollenaufnahme 10 und die Antriebsrollenaufnahme 11 jeweils aus einer an dem Gehäuse 12 angebrachten oberen Platte 13 aus dem Gehäuse 12.

Auf die Antriebsrolle bzw. Druckrollenaufnahme 10, 11 werden nicht gezeigte Antriebs- bzw. Druckrollen aufgesteckt, welche zwischen sich den zu fördernden Schweißdraht aufnehmen und fördern. Des Weiteren weist die Schweißdrahtfördervorrichtung 1 ein Schwenkbetätigungsmittel 20 auf, das aus dem Gehäuse 12 ragt.

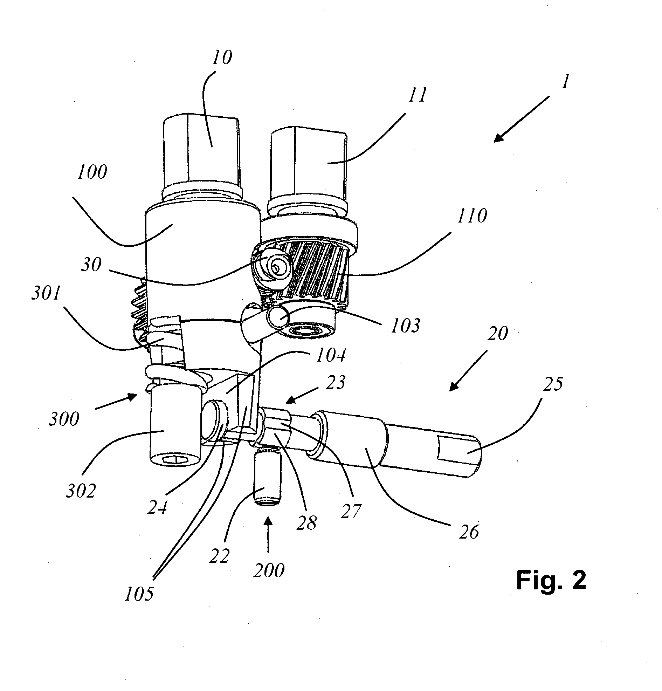

Figur 2 zeigt die Schweißdrahtfördervorrichtung 1 ohne das Gehäuse 12. Die Druckrollenaufnahme 10 ist mit einer Hülse 100 gekoppelt. Des Weiteren ist die Druckrollenaufnahme 10 mit einem Druckrollenaufnahmezahnrad 110 gekoppelt. Sowohl die Druckrollenaufnahme 10 als auch die Hülse 100 sind bezüglich eines Drehbolzens 103 schwenkbar gelagert. Die Hülse 100 ist mit einem Vorspannmittel 300 gekoppelt, das eine Feder 301 und ein Gewindestift 302 aufweist und eine Vorspannkraft auf die Hülse 100 ausübt. Die Vorspannkraft ist derart gerichtet, dass sich die Druckrollenaufnahme 10 und die Hülse 100 um den Drehbolzen 103 in eine Richtung zu der Antriebsrollenaufnahme 11, beispielsweise in die Betriebsstellung, drehen.

Die Hülse 100 umgreift in einem Endabschnitt 104 teilweise einen Abschnitt des Schwenkbetätigungsmittels 20, wobei der Endabschnitt 104 zwei von einem Basisabschnitt vorragende Vorsprünge 105 aufweist. Die Vorsprünge 105 sind derart bezüglich des Basisabschnitts vorgesehen, dass der teilweise umgriffene Abschnitt des Schwenkbetätigungsmittels 20 zwischen den beiden Vorsprüngen 105 vorgesehen ist.

Das Schwenkbetätigungsmittel 20 weist an einem Ende einen Eingriffsbereich 25 zum Eingriff eines nicht dargestellten Hebels zum Drehen des Schwenkbetätigungsmittels 20 auf. Des Weiteren weist das Schwenkbetätigungsmittel 20 an dem dem Eingriffsbereich 25 abgewandten Ende einen Koppelabschnitt 24 auf, der einen größeren Durchmesser als der durch den Endabschnitt 104 umschlossene Abschnitt des Schwenkbetätigungsmittels 20 aufweist. Der Koppelabschnitt 24 ist derart ausgebildet ist, dass dieser mit dem Endabschnitt 104 bzw. den Vorsprüngen 105 der Hülse 100 in Kontakt gebracht werden kann. Genauer gesagt kann der Koppelabschnitt 24 mit dem Basisabschnitt und den beiden Vorsprüngen 105 gekoppelt werden, wenn das Schwenkbetätigungsmittel 20 derart bewegt wird, dass sich die Druckrollenaufnahme 10 in eine Richtung weg von der Antriebsrolle bzw. Antriebsrollenaufnahme bewegt. Das Schwenkbetätigungsmittel 20 weist des Weiteren ein Außengewinde 21 auf, das mit einem nicht dargestellten Innengewinde gekoppelt ist.

Des Weiteren ist das Schwenkbetätigungsmittel 20 mit einer Arretiereinrichtung 200 versehen, die ein Arretiermittel 23 und ein Druckmittel 22 aufweist. Das Arretiermittel 23 weist eine zylinderförmige Ausbildung auf, wobei entlang der Längsrichtung des Arretiermittels 23 mehrere Vertiefungen 27 vorgesehen sind. Das Druckmittel 22 ist derart ausgebildet, dass es mit dem Außenumfang des Arretiermittels 23 in Kontakt stehen kann. D.h., dass das Druckmittel 22 in die Vertiefung 27 ragen bzw. den Grund der Vertiefung 27 kontaktieren oder mit den bezogen auf die Vertiefung 27 hervorstehenden Bereichen 28 des Arretiermittels 23 in Kontakt stehen kann. Das Druckmittel 22 ist ortsfest angeordnet und ist zusammendrückbar ausgebildet.

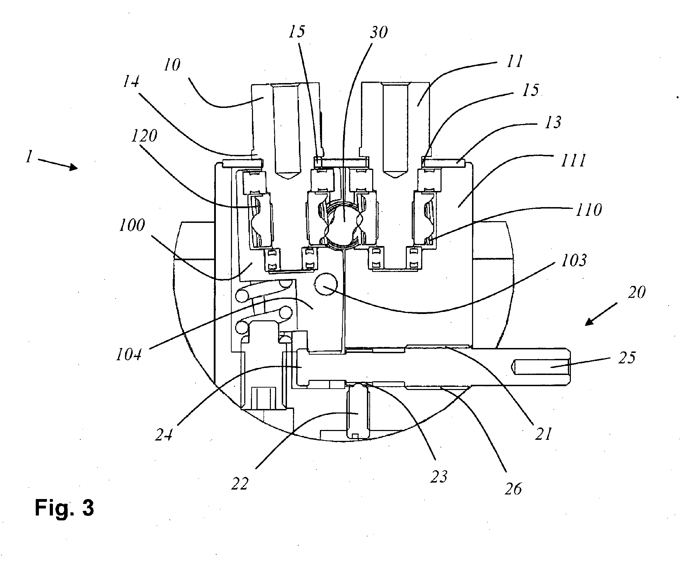

Die Antriebsrollenaufnahme 11 ist, wie in Figur 3 gezeigt, mit einer Hülse 111 und einem Antriebsrollenaufnahmezahnrad 110 gekoppelt. Sowohl die Druckrollenaufnahme 10 als auch die Antriebsrollenaufnahme 11 stehen über ihr jeweiliges Zahnrad 110, 120 mit einer Schneckenwelle 30 in Kontakt. Die Schneckenwelle 30 wird mittels eines in Fig. 2 nicht dargestellten Antriebs angetrieben, wodurch auch die Druckrollenaufnahme 10 und die Antriebsrollenaufnahme 11 angetrieben werden. Die Antriebsrollenaufnahme 11 und die Druckrollenaufnahme 10 ragen teilweilweise über die Öffnung 15 der oberen Platte 13 aus dieser und dem Gehäuse 12.

Die in Figur 3 dargestellte Anordnung der Schweißdrahtfördervorrichtung 1 zeigt die Druckrollenaufnahme 10 in einer von der Antriebsrollenaufnahme 11 weg bewegten arretierten Stellung, wie beispielsweise in der Schweißdrahteinlaufstellung. Der Koppelabschnitt 24 ist in Kontakt mit dem Endabschnitt 104 der Hülse 100 der Druckrollenaufnahme 10. Das Druckmittel 22 ragt in die Vertiefung 27 des Arretiermittels 23, so dass sichergestellt ist, dass sich das Schwenkbetätigungsmittel 20 nicht drehen und damit keine Längsbewegung durchführen kann. Die Hülse 100 und damit die Druckrollenaufnahme 10 werden solange verschwenkt bis ein aus dem Gehäuse 12 ragender Kontaktbereich 14 gegen die obere Platte 13 stößt. Der Kontaktbereich 14 ist derart ausgebildet, dass in eine Richtung quer zu einer Druckrollenaufnahmemittelachse von dem restlichen Bereich der Druckrollenaufnahme 10 hervorsteht.

Im Folgenden wird der Schwenkvorgang der Druckrollenaufnahme 10 erläutert. Das Schwenkbetätigungsmittel 20 wird beispielsweise mittels eines nicht dargestellten Hebels, der mit dem Eingriffsbereich 25 des Schwenkbetätigungsmittels 20 gekoppelt ist, gedreht. Abhängig von der Drehrichtung des Schwenkbetätigungsmittels 20 bewegt sich dieses aufgrund der Koppelung des Schwenkbetätigungsmittels 20 mit dem Innengewinde in eine zu dem Vorspannmittel 300 weisende Richtung oder in eine von dem Vorspannmittel 300 weg weisende Richtung.

Zum Verschwenken der Druckrollenaufnahme 10 in eine Richtung weg von der Antriebsrollenaufnahme 11 muss das Schwenkbetätigungsmittel 20 derart gedreht werden, dass sich dieses in eine Richtung weg von dem Vorspannmittel 300 bewegt. Dabei stößt der Koppelabschnitt 24 gegen den Endabschnitt 104 der Hülse 100, bzw. gegen deren Vorsprünge 105 und die Hülse 100 und damit die Druckrollenaufnahme 10 drehen sich bzw. verschwenken oder kippen um den Drehbolzen 103 in eine Richtung weg von der Antriebsrollenaufnahme 11. Eine Arretierung der Druckrollenaufnahme 10 in der verschwenkten Position erfolgt, sobald das Druckmittel 22 in die Vertiefung des Arretiermittels 23 ragt bzw. den Grund der Vertiefung 27 kontaktiert.

Mittels eines nicht dargestellten Sensors wird die Position der Hülse 100 und/ oder der Druckrollenaufnahme 10 ermittelt. Für den Fall, dass sich die Druckrollenaufnahme 10 in der Schweißdrahteinlaufstellung befindet, übermittelt der Sensor ein Signal an eine Stromquelleneinrichtung. Sobald die Stromquelleneinrichtung das Signal empfängt, löst die Stromquelleneinrichtung einen stromlosen Schweißdrahtvorschub aus.

### Bezugszeichenliste

- 1: Schweißdrahtfördervorrichtung
- 10: Druckrollenaufnahme
- 11: Antriebsrollenaufnahme
- 12: Gehäuse
- 13: obere Platte
- 14: Kontaktbereich
- 15: Öffnung
- 20: Schwenkbetätigungsmittel
- 21: Außengewinde
- 22: Druckmittel
- 23: Arretiermittel
- 24: Koppelabschnitt
- 25: Eingriffsbereich
- 26: Hülse
- 27: Vertiefung
- 28: Bereiche
- 30: Schneckenwelle
- 100: Hülse der Druckrollenaufnahme
- 103: Drehbolzen
- 104: Endabschnitt
- 105: Vorsprung
- 110: Antriebsrollenaufnahmezahnrad
- 111: Hülse der Antriebsrollenaufnahme
- 120: Druckrollenaufnahmezahnrad
- 200: Arretiereinrichtung
- 300: Vorspannmittel
- 301: Feder
- 302: Gewindestift

## Patentansprüche

1. Schweißdrahtfördervorrichtung (1) mit wenigstens zwei Rollenaufnahmen, insbesondere einer Antriebsrollenaufnahme (11) und einer Druckrollenaufnahme (10), wobei wenigstens eine der beiden Rollenaufnahmen schwenkbar und mit einem Schwenkbetätigungsmittel (20) gekoppelt ist, wobei das Schwenkbetätigungsmittel (20) eine Arretiereinrichtung (200) zum Arretieren der Position der Rollenaufnahme aufweist, **dadurch gekennzeichnet, dass** die Arretiereinrichtung (200) ein Arretiermittel (23) und ein stauchbares Druckmittel (22) aufweist, das mit dem Arretiermittel (23), insbesondere dem Außenumfang des Arretiermittels (23), koppelbar ist, wobei entlang des Außenumfangs des Arretiermittels (23) wenigstens eine in Längsrichtung des Arretiermittels (23) verlaufende Vertiefung vorgesehen ist, und das Druckmittel (22) als ein Mittel ausgebildet ist, welches in Richtung zum Arretiermittel (23) vorgespannt und zusammengedrückt wird, wenn es mit dem von der Vertiefung des Arretiermittels (23) hervorstehenden Bereichs in Kontakt ist.

2. Schweißdrahtfördervorrichtung (1) nach Anspruch 1, **dadurch gekennzeichnet, dass** das Schwenkbetätigungsmittel (20) entlang seiner Längsachse verschiebbar ist.

3. Schweißdrahtfördervorrichtung (1) nach Anspruch 1 oder 2, **dadurch gekennzeichnet, dass** die Druckrollenaufnahme (10) mit einer Hülse (100) gekoppelt ist, wobei die Hülse (100) mit dem Schwenkbetätigungsmittel (20) koppelbar ist.

4. Schweißdrahtfördervorrichtung (1) nach Anspruch 3, **dadurch gekennzeichnet, dass** das Schwenkbetätigungsmittel (20) an einem Ende über einen Koppelabschnitt (24) mit der Hülse (100) koppelbar ist.

5. Schweißdrahtfördervorrichtung (1) nach Anspruch 4, **dadurch gekennzeichnet, dass** das Arretiermittel (23) zylinderförmig ausgebildet ist, wobei eine Arretierung der Position der Druckrollenaufnahme (10) erfolgt, wenn das Druckmittel (22) in die Vertiefung des Arretiermittels (23) ragt.

6. Schweißdrahtfördervorrichtung (1) nach einem der vorhergehenden Ansprüche 2 bis 5, **dadurch gekennzeichnet, dass** ein Vorspannmittel (300) vorgesehen ist, das eine Vorspannkraft auf die Hülse (100) ausübt.

7. Schweißdrahtfördervorrichtung (1) nach Anspruch 6, **dadurch gekennzeichnet, dass** das Vorspannmittel (300) und das Schwenkbetätigungsmittel (20) mit der Hülse (100) derart gekoppelt sind, dass eine Drehung der Hülse (100) aufgrund der Vorspannkraft entgegengesetzt zu der Drehung der Hülse (100) aufgrund der Koppelung des Schwenkbetätigungsmittels (20) mit der Hülse (100) ist.

8. Schweißdrahtfördervorrichtung (1) nach einem der vorhergehenden Ansprüche, **dadurch gekennzeichnet, dass** die Druckrollenaufnahme (10) als weitere Antriebsrollenaufnahme ausgebildet ist.

9. Schweißdrahtfördervorrichtung (1) nach einem der vorhergehenden Ansprüche, **dadurch gekennzeichnet, dass** ein Sensor vorgesehen ist, der die Position der Rollenaufnahme ermittelt und an eine Stromquelleneinrichtung ein Signal zur Auslösung eines Schweißdrahtvorschubs, insbesondere eines Vorschubes mit einem stromlosen Schweißdraht, übermittelt, wenn sich die Rollenaufnahme in einer Schweißdrahteinlaufstellung befindet.

10. Schweißdrahtfördervorrichtung (1) nach einem der vorhergehenden Ansprüche, **dadurch gekennzeichnet, dass** ein Sensor vorgesehen ist, der die Position der Rollenaufnahme ermittelt und an eine Stromquelleneinrichtung ein Signal zum Unterbinden eines Schweißdrahtvorschubs übermittelt, wenn sich die Rollenaufnahme in einer Rollenwechselstellung befindet.

## Claims

1. Welding wire feeding device (1) with at least two roll receivers, in particular a drive roll receiver (11) and a pressure roll receiver (10), wherein at least one of the two roll receivers is pivotable and is coupled to a pivoting actuating means (20), wherein the pivoting actuating means (20) comprises an arresting device (200) for arresting the position of the roll receiver, **characterized in that** the arresting device (200) comprises an arresting means (23) and a compressible pressure means (22) that can be coupled to the arresting means (23), in particular to the outer circumference of the arresting means (23), wherein at least one recess running in the longitudinal direction of the arresting means (23) is provided along the outer circumference of the arresting means (23), and the pressure means (22) is formed as a means that is prestressed and compressed in the direction of the arresting means (23) when it is in contact with the region rising up from the recess of the arresting means (23).

2. Welding wire feeding device (1) according to Claim 1, **characterized in that** the pivoting actuating means (20) is displaceable along its longitudinal axis.

3. Welding wire feeding device (1) according to Claim 1 or 2, **characterized in that** the pressure roll receiver (10) is coupled to a sleeve (100), the sleeve (100) being able to be coupled to the pivoting actuating means (20).

4. Welding wire feeding device (1) according to Claim 3, **characterized in that** the pivoting actuating means (20) can be coupled at one end to the sleeve (100) by way of a coupling portion (24).

5. Welding wire feeding device (1) according to Claim 4, **characterized in that** the arresting means (23) is cylindrically formed, wherein an arrestment of the position of the pressure roll receiver (10) takes place when the pressure means (22) protrudes into the recess of the arresting means (23).

6. Welding wire feeding device (1) according to one of the preceding Claims 2 to 5, **characterized in that** a prestressing means (300) that exerts a prestressing force on the sleeve (100) is provided.

7. Welding wire feeding device (1) according to Claim 6, **characterized in that** the prestressing means (300) and the pivoting actuating means (20) are coupled to the sleeve (100) in such a way that a rotation of the sleeve (100) due to the prestressing force is opposite to the rotation of the sleeve (100) due to the coupling of the pivoting actuating means (20) to the sleeve (100).

8. Welding wire feeding device (1) according to one of the preceding claims, **characterized in that** the pressure roll receiver (10) is formed as a further drive roll receiver.

9. Welding wire feeding device (1) according to one of the preceding claims, **characterized in that** a sensor that determines the position of the roll receiver is provided and transmits a signal to a current source device to initiate a welding wire advance, in particular an advance with a de-energized welding wire, when the roll receiver is in a welding wire insertion position.

10. Welding wire feeding device (1) according to one of the preceding claims, **characterized in that** a sensor that determines the position of the roll receiver is provided and transmits a signal to a current source device to block a welding wire advance when the roll receiver is in a roll changing position.

## Revendications

1. Dispositif d'alimentation de fil de soudure (1) comprenant au moins deux logements de rouleau, en particulier un logement de rouleau d'entraînement (11) et un logement de rouleau de pression (10), au moins l'un des deux logements de rouleau étant pivotant et accouplé à un moyen d'actionnement de pivotement (20), le moyen d'actionnement de pivotement (20) comprenant un dispositif de blocage (200) pour le blocage de la position du logement de rouleau, **caractérisé en ce que** le dispositif de blocage (200) comprend un moyen de blocage (23) et un moyen de pression compressible (22) qui peut être accouplé au moyen de blocage (23), en particulier à la périphérie extérieure du moyen de blocage (23), au moins un évidement s'étendant dans la direction longitudinale du moyen de blocage (23) étant prévu le long de la périphérie extérieure du moyen de blocage (23), et le moyen de pression (22) étant réalisé en tant que moyen qui est précontraint en direction du moyen de blocage (23) et comprimé lorsqu'il est en contact avec la région faisant saillie à partir de l'évidement du moyen de blocage (23).

2. Dispositif d'alimentation de fil de soudure (1) selon la revendication 1, **caractérisé en ce que** le moyen d'actionnement de pivotement (20) est déplaçable le long de son axe longitudinal.

3. Dispositif d'alimentation de fil de soudure (1) selon la revendication 1 ou 2, **caractérisé en ce que** le logement de rouleau de pression (10) est accouplé à une douille (100), la douille (100) pouvant être accouplée au moyen d'actionnement de pivotement (20).

4. Dispositif d'alimentation de fil de soudure (1) selon la revendication 3, **caractérisé en ce que** le moyen d'actionnement de pivotement (20) peut être accouplé à la douille (100) à une extrémité par le biais d'une portion d'accouplement (24).

5. Dispositif d'alimentation de fil de soudure (1) selon la revendication 4, **caractérisé en ce que** le moyen de blocage (23) est réalisé sous forme cylindrique, un blocage de la position du logement de rouleau de pression (10) s'effectuant lorsque le moyen de pression (22) fait saillie dans l'évidement du moyen de blocage (23).

6. Dispositif d'alimentation de fil de soudure (1) selon l'une quelconque des revendications précédentes 2 à 5, **caractérisé en ce qu'**un moyen de précontrainte (300) est prévu, lequel exerce une force de précontrainte sur la douille (100).

7. Dispositif d'alimentation de fil de soudure (1) selon la revendication 6, **caractérisé en ce que** le moyen de précontrainte (300) et le moyen d'actionnement de pivotement (20) sont accouplés à la douille (100), de telle sorte qu'une rotation de la douille (100) en raison de la force de précontrainte soit opposée à la rotation de la douille (100) en raison de l'accouplement du moyen d'actionnement de pivotement (20) à la douille (100).

8. Dispositif d'alimentation de fil de soudure (1) selon l'une quelconque des revendications précédentes, **caractérisé en ce que** le logement de rouleau de pression (10) est réalisé en tant que logement de rouleau d'entraînement supplémentaire.

9. Dispositif d'alimentation de fil de soudure (1) selon l'une quelconque des revendications précédentes, **caractérisé en ce qu'**un capteur est prévu, lequel détecte la position du logement de rouleau et transmet à un dispositif de source de courant un signal pour le déclenchement d'un avancement de fil de soudure, en particulier d'un avancement avec un fil de soudure sans courant, lorsque le logement de rouleau se trouve dans une position d'entrée de fil de soudure.

10. Dispositif d'alimentation de fil de soudure (1) selon l'une quelconque des revendications précédentes, **caractérisé en ce qu'**un capteur est prévu, lequel détecte la position du logement de rouleau et transmet à un dispositif de source de courant un signal pour empêcher un avancement de fil de soudure lorsque le logement de rouleau se trouve dans une position de changement de rouleau.
